# EUROPEAN PATENT APPLICATION

(11) **EP 3 474 606 A1**
(43) Date of publication of application: **24.04.2019**
(21) Application number: 16908408.4
(22) Date of filing: 11.07.2016
(51) Int. Cl.: H04W 48/18, H04W 48/12, H04W 48/06

(54) **METHOD, DEVICE, AND SYSTEM FOR TRIGGERING CIRCUIT SWITCHED FALLBACK PROCESS**

(71) Applicant: Huawei Technologies Co., Ltd., Longgang District Shenzhen, Guangdong 518129 (CN)
(72) Inventor: LIU, Jing, Shenzhen Guangdong 518129 (CN); DAI, Mingzeng, Shenzhen Guangdong 518129 (CN)
(74) Representative: Körber, Martin Hans
(86) International application number: PCT/CN2016/089678
(87) International publication number: WO 2018/010076

(57) **Abstract**

Embodiments of this application provide a method for triggering a circuit switching fallback procedure, an apparatus, and a system, which relate to the communications field, and can improve a call success probability of a voice service of a terminal when weak coverage occurs in an LTE network. The method includes: receiving, by a terminal in an idle state, a system message from an evolved NodeB, where the system message is used to indicate that the evolved NodeB cannot perform a voice service of the terminal; and after receiving the system message, initiating, by the terminal, the voice service by using a base station of a 2G/3G network.

## Description

### TECHNICAL FIELD

This application relates to the communications field, and in particular, to a method for triggering a circuit switching fallback procedure, an apparatus, and a system.

### BACKGROUND

With evolution of a mobile broadband network, a wireless side evolves from Global System for Mobile Communications (English full name: global system for mobile communications, GSM for short), Code Division Multiple Access (English full name: code division multiple access, CDMA for short), or Universal Mobile Telecommunications System (English full name: universal mobile telecommunications system, UMTS for short) to Long Term Evolution (English full name: long term evolution, LTE for short), and a core network evolves from circuit switching (English full name: Circuit Switched, CS for short) to an IP multimedia subsystem (English full name: IP Multimedia Subsystem, IMS for short). A voice service is developing from soft switching towards mobile broadband voice.

In addition to providing a high-rate data service, an LTE network further provides a high-quality audio/video call voice service by using an IMS-based voice service (English full name: Voice over LTE, VoLTE for short) technology. In other words, the IMS is deployed in the LTE network. When a terminal initiates or receives a voice call, a voice service of the terminal is processed by using the IMS network. Further, when weak coverage occurs in the LTE network, the voice service of the terminal is processed by using a single radio voice call continuity (English full name: Single Radio Voice Call Continuity, SRVCC for short) technology. In other words, the IMS can control the voice service of the terminal to be seamlessly switched to a CS field of a second-generation wireless communications technology (English full name: 2-Generation wireless telephone technology, 2G for short) network or a third-generation mobile telecommunications technology (English full name: 3rd-Generation, 3G for short) network for processing.

However, in the case of weak coverage, when the SRVCC technology is used to process the voice service of the terminal, a Session Initiation Protocol (English full name: Session Initiation Protocol, SIP for short) signaling loss may be caused. This leads to a voice service call exception or failure and severely affects user call quality and user experience.

### SUMMARY

The present invention is intended to provide a method for triggering a circuit switching fallback procedure, an apparatus, and a system, which can improve a call success probability of a voice service of a terminal when weak coverage occurs in an LTE network, thereby improving user call quality and user experience to some extent.

The foregoing objectives and other objectives may be achieved by using features in independent claims. Further implementations are presented in dependent claims, this specification, and the accompanying drawings.

According to a first aspect, a method for triggering a circuit switching fallback procedure is provided, including:
When a terminal camps on a cell deployed on an evolved NodeB (English full name: evolved NodeB, eNB for short) and is in an idle state, the terminal receives, from the evolved NodeB, a system message that is used to indicate that the evolved NodeB cannot perform a voice service of the terminal. After receiving the system message, the terminal may initiate the voice service by using a base station of a 2G network or a 3G network.

According to the method for triggering a circuit switching fallback procedure provided in the first aspect, when the terminal is in the idle state, after receiving, from the evolved NodeB, the system message that is used to indicate that the evolved NodeB cannot perform the voice service of the terminal, the terminal performs, based on the indication of the system message before performing the voice service, cell reselection and camps on the base station of the 2G/3G network, and initiates the voice service by using the base station of the 2G/3G network. This avoids that when weak coverage occurs in an LTE network, after the terminal initiates a voice call by using the evolved NodeB, the evolved NodeB triggers the circuit switching fallback procedure based on an instruction of a mobility management entity (English full name: Mobility Management Entity, MME for short), thereby shortening a latency of voice call initiation by the terminal, improving a call success probability of the voice service of the terminal, and improving user call quality and user experience to some extent.

With reference to the first aspect, in a first possible implementation, the system message includes load information of the evolved NodeB. With load indicated by the load information, the evolved NodeB cannot perform the voice service of the terminal.

With reference to the first aspect, in a second possible implementation, the system message includes an access class barring (English full name: Access Class Barring, ACB for short) parameter. The ACB parameter is used to indicate that the terminal cannot access the evolved NodeB.

With reference to any one of the first aspect, or the first and the second possible implementations, in a third possible implementation, the method further includes:
performing, by the terminal, neighboring cell measurement, where the neighboring cell measurement is used to select the base station of the 2G/3G network.

According to a second aspect, a method for triggering a circuit switching fallback procedure is provided, including:
generating, by an evolved NodeB, a system message that is used to indicate that the evolved NodeB cannot perform a voice service; and broadcasting, by the evolved NodeB, the system message.

According to the method for triggering a circuit switching fallback procedure provided in the second aspect, when the terminal is in an idle state, the evolved NodeB generates the system message that is used to indicate that the evolved NodeB cannot perform the voice service and broadcasts the system message, so that after receiving, from the evolved NodeB, the system message that is used to indicate that the evolved NodeB cannot perform the voice service of the terminal, the terminal performs, based on the indication of the system message before performing the voice service, cell reselection and camps on a base station of a 2G/3G network, and initiates the voice service by using the base station of the 2G/3G network. This avoids that when weak coverage occurs in an LTE network, after the terminal initiates a voice call by using the evolved NodeB, the evolved NodeB triggers the circuit switching fallback procedure based on an instruction of an MME, thereby shortening a latency of voice call initiation by the terminal, improving a call success probability of the voice service of the terminal, and improving user call quality and user experience to some extent.

With reference to the second aspect, in a first possible implementation, the system message includes load information of the evolved NodeB. With load indicated by the load information, the evolved NodeB cannot perform the voice service.

With reference to the second aspect, in a second possible implementation, the system message includes an ACB parameter. The ACB parameter is used to indicate that a terminal that does not meet the ACB parameter condition cannot access the evolved NodeB.

According to a third aspect, a method for triggering a circuit switching fallback procedure is provided, including:
receiving, by an evolved NodeB, SIP signaling or a request of establishing a voice bearer; and when the evolved NodeB determines that the evolved NodeB cannot provide a voice service for a terminal, rejecting, by the evolved NodeB, the SIP signaling or the request of establishing a voice bearer, and sending instruction information to the terminal; where the instruction information is used to instruct the terminal to access a base station of a 2G/3G network to perform the voice service.

According to the method for triggering a circuit switching fallback procedure provided in the third aspect, when the terminal is in a connected state, after the evolved NodeB receives the SIP signaling or the request of establishing a voice bearer, if determining that the evolved NodeB cannot provide the voice service for the terminal, the evolved NodeB rejects the SIP signaling or the request of establishing a voice bearer, and sends the instruction information to the terminal, instructing the terminal to access the base station of the 2G/3G network to perform the voice service. In this way, after receiving, from the evolved NodeB, the system message that is used to indicate that the evolved NodeB cannot perform the voice service of the terminal, the terminal performs, based on the indication of the system message, cell reselection and camps on the base station of the 2G/3G network, and initiates the voice service by using the base station of the 2G/3G network. This avoids that when weak coverage occurs in an LTE network, after the terminal initiates a voice call by using the evolved NodeB, the evolved NodeB triggers the circuit switching fallback procedure based on an instruction of an MME, thereby shortening a latency of voice call initiation by the terminal, improving a call success probability of the voice service of the terminal, and improving user call quality and user experience to some extent.

With reference to the third aspect, in a first possible implementation, that the evolved NodeB cannot provide a voice service for a terminal includes:
quality of an air-interface link between the evolved NodeB and the terminal is poor, and consequently the evolved NodeB cannot provide the voice service for the terminal; or load of the evolved NodeB is heavy, and consequently the evolved NodeB cannot provide the voice service for the terminal.

With reference to the third aspect or the first possible implementation, in a second possible implementation, the rejecting, by the evolved NodeB, the SIP signaling includes:
initiating, by the evolved NodeB, a procedure of releasing a bearer of the terminal.

With reference to any one of the third aspect, or the first and the second possible implementations, in a third possible implementation, the instruction information includes:
information about the base station of the 2G/3G network.

With reference to any one of the third aspect, or the first to the third possible implementations, in a fourth possible implementation:
the instruction information is redirection instruction information; and
the sending, by the evolved NodeB, instruction information to the terminal includes:
   sending, by the evolved NodeB, an RRC connection release message or a handover command message, where the RRC connection release message or the handover command message includes the redirection instruction information.

With reference to any one of the third aspect, or the first to the fourth possible implementations, in a fifth possible implementation, the method further includes:
receiving, by the evolved NodeB, a measurement report from the terminal, where the measurement report is used to indicate air-interface information of the base station of the 2G/3G network.

With reference to any one of the third aspect, or the first to the fifth possible implementations, in a sixth possible implementation, the terminal is a calling terminal or a called terminal.

With reference to any one of the third aspect, or the first to the fifth possible implementations, in a seventh possible implementation, the SIP signaling is obtained by the evolved NodeB through application-layer parsing.

According to a fourth aspect, a terminal is provided, the terminal is in an idle state, and the terminal includes:
a receiving unit, configured to receive a system message from an evolved NodeB, where the system message is used to indicate that the evolved NodeB cannot perform a voice service of the terminal; and a processing unit, configured to: after the receiving unit receives the system message, initiate the voice service by using a base station of a 2G/3G network. For a specific implementation, refer to a behavior function of the terminal in the method for triggering a circuit switching fallback procedure provided in the first aspect.

According to a fifth aspect, an evolved NodeB is provided, including:
a processing unit, configured to generate a system message; and a sending unit, configured to broadcast the system message, where the system message is used to indicate that the evolved NodeB cannot perform a voice service. For a specific implementation, refer to a behavior function of the evolved NodeB in the method for triggering a circuit switching fallback procedure provided in the second aspect.

According to a sixth aspect, an evolved NodeB is provided, including:
a receiving unit, configured to receive Session Initiation Protocol SIP signaling or a request of establishing a voice bearer; a processing unit, configured to: when the evolved NodeB cannot provide a voice service for a terminal, reject the SIP signaling or the request of establishing a voice bearer; and a sending unit, configured to send instruction information to the terminal; where the instruction information is used to instruct the terminal to access a base station of a 2G/3G network to perform the voice service. For a specific implementation, refer to a behavior function of the evolved NodeB in the method for triggering a circuit switching fallback procedure provided in the third aspect.

It should be noted that the function modules described in the fourth to the sixth aspects may be implemented by hardware, or may be implemented by hardware by implementing corresponding software. The hardware or the software includes one or more modules corresponding to the foregoing functions. For example, a communications interface is configured to complete functions of the receiving unit and the sending unit, and a processor is configured to complete functions of the processing unit. The processor, the communications interface, and the memory are connected to each other and communicate with each other by using a bus. For details, refer to the behavior function of the terminal in the method for triggering a circuit switching fallback procedure provided in the first aspect, and refer to the behavior functions of the evolved NodeB in the methods for triggering a circuit switching fallback procedure provided in the second aspect and the third aspect.

In the present invention, names of the terminal and the evolved NodeB constitute no limitation on devices themselves. In actual implementation, these devices may be shown in other names. Provided that a function of each device is similar to that in the present invention, the device falls within the scope of protection defined by the claims in the present invention and their equivalent technologies.

These aspects or other aspects of the present invention may be clearer in description of the following embodiments.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show some embodiments of this application, and a person of ordinary skill in the art may derive other drawings from these accompanying drawings without creative efforts.
FIG. 1 is a schematic diagram of a communications system according to an embodiment of this application;
FIG. 2 is a schematic structural diagram of a computer device according to an embodiment of this application;
FIG. 3 is a flowchart of a method for triggering a circuit switching fallback procedure according to an embodiment of this application;
FIG. 4 is a flowchart of another method for triggering a circuit switching fallback procedure according to an embodiment of this application;
FIG. 5 is a flowchart of still another method for triggering a circuit switching fallback procedure according to an embodiment of this application;
FIG. 6 is a flowchart of yet another method for triggering a circuit switching fallback procedure according to an embodiment of this application;
FIG. 7 is a schematic structural diagram of a terminal according to an embodiment of this application;
FIG. 8 is a schematic structural diagram of an evolved NodeB according to an embodiment of this application; and
FIG. 9 is a schematic structural diagram of another evolved NodeB according to an embodiment of this application.

### DESCRIPTION OF EMBODIMENTS

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application without creative efforts shall fall within the protection scope of this application.

A basic principle of the present invention is as follows: When a terminal is in an idle state, after receiving, from an evolved NodeB, a system message that is used to indicate that the evolved NodeB cannot perform a voice service of the terminal, the terminal performs, based on the indication of the system message before performing the voice service, cell reselection and camps on a base station of a 2G/3G network, and initiates the voice service by using the base station of the 2G/3G network.

Further, when the terminal is in a connected state, after the evolved NodeB receives SIP signaling or a request of establishing a voice bearer, and determines that the evolved NodeB cannot provide the voice service for the terminal, the evolved NodeB rejects the SIP signaling or the request of establishing a voice bearer, and sends instruction information to the terminal, instructing the terminal to access the base station of the 2G/3G network to perform the voice service. In this way, after receiving, from the evolved NodeB, the system message that is used to indicate that the evolved NodeB cannot perform the voice service of the terminal, the terminal performs, based on the indication of the system message, cell reselection and camps on the base station of the 2G/3G network, and initiates the voice service by using the base station of the 2G/3G network.

This avoids the case that when weak coverage occurs in an LTE network, after the terminal initiates a voice call by using the evolved NodeB, the evolved NodeB triggers a circuit switching fallback procedure based on an instruction of an MME, thereby shortening a latency of voice call initiation by the terminal, improving a call success probability of the voice service of the terminal, and improving user call quality and user experience to some extent.

The following describes implementations of the present invention in detail with reference to accompanying drawings.

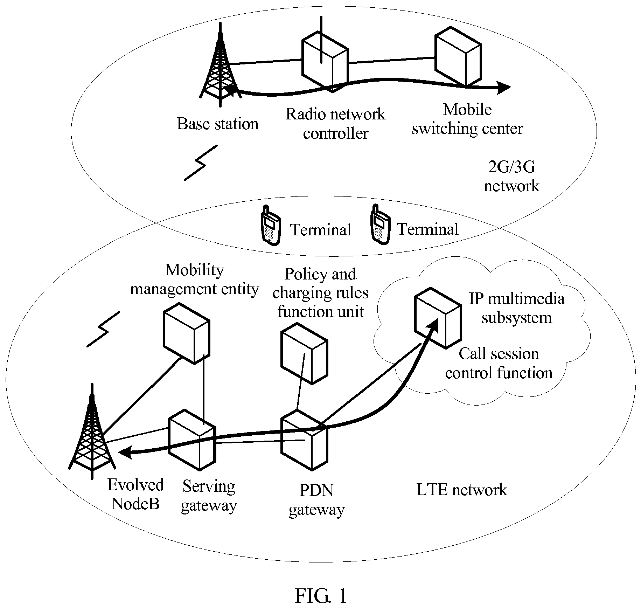

An embodiment of the present invention provides a schematic diagram of a communications system. FIG. 1 shows an LTE network, a 2G/3G network, and a terminal. The LTE network specifically includes an evolved NodeB, a serving gateway (English full name: Serving Gate Way, SGW for short), a PDN gateway (English full name: PDN Gate Way, PGW for short), an MME, a policy and charging rules function (English full name: Policy and Charging Rules Function, PCRF for short) unit, and a call session control function (English full name: Call Session Control Function, CSCF for short). The CSCF is a main device in IMS. The 2G/3G network specifically includes a base station (English full name: Base Station, BS for short), a mobile switching center (English full name: Mobile Switching Center, MSC for short), and a radio network controller (English full name: Radio Network Controller, RNC for short).

When the terminal is within a coverage area of the LTE network, the terminal may camp on a cell deployed on the evolved NodeB. When the terminal is within a coverage area of the 2G network/3G network, the terminal may camp on a cell deployed on the base station. During moving, the terminal may be handed over between the coverage area of the LTE network and the coverage area of the 2G/3G network, and select a network with better terminal signal quality for communication.

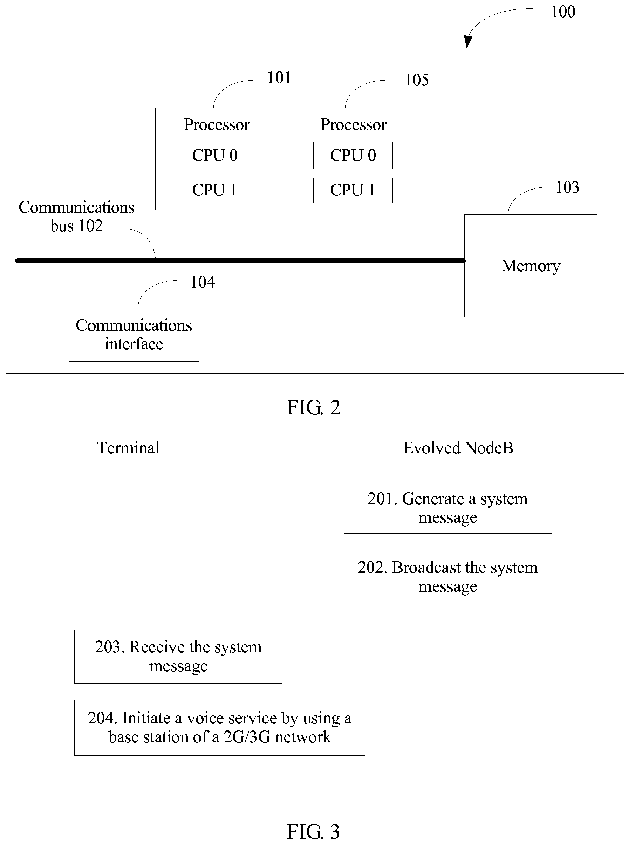

As shown in FIG. 2, the evolved NodeB, the base station, and the terminal in FIG. 1 may be implemented in a manner of a computer device (or a system) in FIG. 2.

FIG. 2 is a schematic diagram of a computer device according to an embodiment of the present invention. A computer device 100 includes at least one processor 101, a communications bus 102, and at least one communications interface 104. Optionally, the computer device 100 may further include a memory 103.

The processor 101 may be a processor or a general name of a plurality of processing elements. For example, the processor 101 may be a general-purpose central processing unit (English full name: Central Processing Unit, CPU for short), an application-specific integrated circuit (English full name: application-specific integrated circuit, ASIC for short), or one or more integrated circuits configured to control execution of a solution program of the present invention, for example, one or more microprocessors (English full name: digital signal processor, DSP for short) or one or more field programmable gate arrays (English full name: Field Programmable Gate Array, FPGA for short).

In specific implementation, as an embodiment, the processor 101 may include one or more CPUs such as a CPU 0 and a CPU 1 in FIG. 2.

In specific implementation, as an embodiment, the computer device 100 may include a plurality of processors such as the processor 101 and a processor 105 in FIG. 2. Each of these processors may be a single-core (single-CPU) processor or may be a multi-core (multi-CPU) processor. The processor herein may be one or more devices, circuits and/or processing cores used to process data (for example, a computer program instruction).

The communications bus 102 may be an industry standard architecture (English full name: Industry Standard Architecture, ISA for short) bus, a peripheral component interconnect (English full name: Peripheral Component, PCI for short) bus, an extended industry standard architecture (English full name: Extended Industry Standard Architecture, EISA for short) bus, or the like. The bus may be classified into an address bus, a data bus, a control bus, and the like. For ease of denotation, only one thick line is used to denote the bus in FIG. 2, but this does not mean that there is only one bus or only one type of bus.

The memory 103 may be a read-only memory (English full name: read-only memory, ROM for short) or another type of static storage device that can store static information and instructions, a random access memory (English full name: random access memory, RAM for short) or another type of dynamic storage device that can store information and instructions; and may also be an electrically erasable programmable read-only memory (English full name: Electrically Erasable Programmable Read-Only Memory, EEPROM for short), a compact disc read-only memory (English full name: Compact Disc Read-Only Memory, CD-ROM for short), or other compact disc storage, optical disc storage (including a compact disc, a laser disc, an optical disc, a digital versatile disc, a blue-ray disc, and the like), a disk storage medium or another disk storage device, or any other medium that can be used to carry or store expected program code that has an instruction or digital structure form and that can be accessed by a computer, which, however, is not limited herein. The memory may exist independently and is connected to the processor by using the bus. The memory may also be integrated with the processor.

The memory 103 is configured to store application program code used for executing the solution of the present invention, and the execution is controlled by the processor 101. The processor 101 is configured to execute the application program code stored in the memory 103. It should be noted that the application program code in the foregoing memory 103 may further be burned in the processor 101. In this case, the memory 103 does not need to store the foregoing application program code, and the processor 101 may directly perform functions of the foregoing application program code.

The communications interface 104 is configured to communicate, by using any apparatus of a transceiver type, with another device or communications network, such as an Ethernet, a radio access network (RAN), or a wireless local area network (English full name: Wireless Local Area Networks, WLAN for short). The communications interface 104 may include a receiving unit to implement a receiving function, and may also include a sending unit to implement a sending function. For example, the communications interface may be implemented by a transceiver, a transmitter, or a receiver.

In specific implementation, as an embodiment, the computer device 100 shown in FIG. 2 may be the evolved NodeB in FIG. 1.

The processor 101 is configured to generate a system message.

The processor 101 is further configured to reject SIP signaling or a request of establishing a voice bearer.

The communications interface 104 is configured to broadcast the system message.

The communications interface 104 is further configured to receive the Session Initiation Protocol SIP signaling or the request of establishing a voice bearer.

In specific implementation, as an embodiment, the computer device 100 shown in FIG. 2 may be the terminal in FIG. 1.

The communications interface 104 is configured to receive a system message from an evolved NodeB.

The processor 101 is configured to initiate a voice service by using a base station of a 2G/3G network.

The processor 101 is further configured to perform neighboring cell measurement.

It should be noted that, to facilitate clear description of the technical solutions in the embodiments of the present invention, words such as "first" and "second" are used in the embodiments of the present invention to distinguish between same items or similar items that provide basically same functions or purposes. A person skilled in the art may understand that the words such as "first" and "second" do not limit a quantity and an execution order.

### Embodiment 1

This embodiment of the present invention provides a method for triggering a circuit switching fallback procedure. A terminal camps on a cell deployed on an evolved NodeB, and the terminal is in an idle state. As shown in FIG. 3, the method includes the following steps.

Step 201: The evolved NodeB generates a system message.

The system message is used to indicate that the evolved NodeB cannot perform a voice service. Optionally, the system message includes load information of the evolved NodeB. Therefore, with load indicated by the load information, the evolved NodeB cannot perform the voice service. Optionally, the system message includes an ACB parameter. The ACB parameter is used to indicate that a terminal that does not meet the ACB parameter condition cannot access the evolved NodeB.

Before the evolved NodeB sends the system message to the terminal camping on the evolved NodeB, to indicate that the evolved NodeB cannot perform the voice service, in an implementation, the evolved NodeB may determine a network load status of the evolved NodeB based on a comparison between current network load and a preset threshold. For example, when the evolved NodeB determines that the network load of the evolved NodeB is greater than or equal to the preset threshold, it indicates that the network load of the evolved NodeB is heavy, and the terminal may not perform the voice service by using the evolved NodeB. Therefore, the system message is used to indicate that the evolved NodeB cannot perform the voice service. Particularly, the system message may be an indication directly indicating that the network load of the evolved NodeB is excessively heavy, and the evolved NodeB cannot be used to perform the voice service, or the system message may include a value of the network load of the evolved NodeB. In another implementation, when the evolved NodeB finds that the network load of the evolved NodeB is heavy or quality of an air-interface signal between the evolved NodeB and the terminal is poor, and the voice service of the terminal cannot be satisfied, the evolved NodeB may update the ACB parameter, and prohibit access of a voice call user. The ACB parameter is carried in a system information block 2 (English full name: system information block, SIB for short) and broadcast. All terminals within a coverage area of the evolved NodeB may receive the SIB 2 to control access of the terminals.

Step 202: The evolved NodeB broadcasts the system message.

Step 203: The terminal in the idle state receives the system message from the evolved NodeB.

The system message is used to indicate that the evolved NodeB cannot perform the voice service of the terminal. Optionally, the system message includes the load information of the evolved NodeB. Therefore, with the load indicated by the load information, the evolved NodeB cannot perform the voice service of the terminal. Optionally, the system message includes the ACB parameter. The ACB parameter is used to indicate that the terminal cannot access the evolved NodeB.

Step 204: The terminal initiates the voice service by using a base station of a 2G/3G network.

In this way, when the terminal is in the idle state, after receiving, from the evolved NodeB, the system message that is used to indicate that the evolved NodeB cannot perform the voice service of the terminal, the terminal performs, based on the indication of the system message before performing the voice service, cell reselection and camps on the base station of the 2G/3G network, and initiates the voice service by using the base station of the 2G/3G network. This avoids that when weak coverage occurs in an LTE network, after the terminal initiates a voice call by using the evolved NodeB, the evolved NodeB triggers the circuit switching fallback procedure based on an instruction of an MME, thereby shortening a latency of voice call initiation by the terminal, improving a call success probability of the voice service of the terminal, and improving user call quality and user experience to some extent.

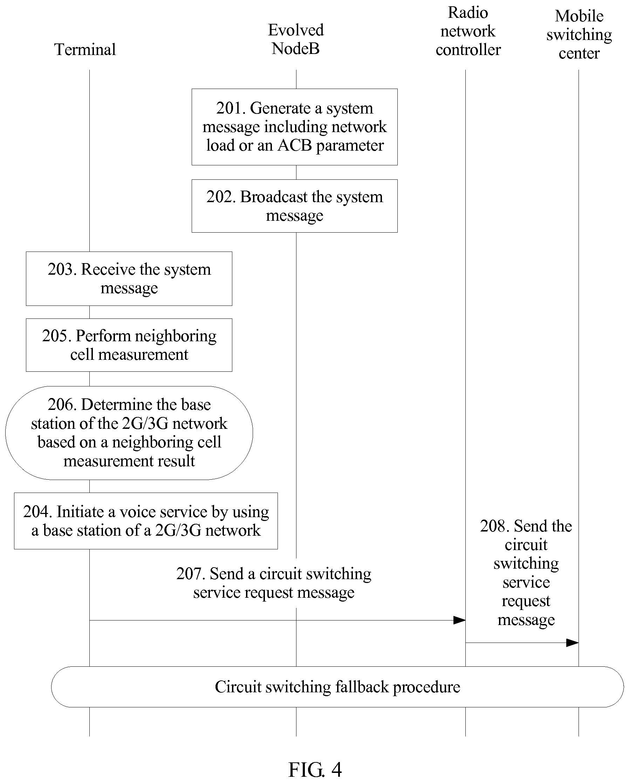

Further, as shown in FIG. 4, before the terminal initiates the voice service by using the base station of the 2G/3G network, namely, step 204, the terminal needs to perform neighboring cell measurement.

Step 205: The terminal performs neighboring cell measurement.

Step 206: The terminal determines the base station of the 2G/3G network based on a neighboring cell measurement result.

After the terminal initiates the voice service by using the base station of the 2G/3G network, namely, step 204, the terminal may further perform the following steps.

Step 207: The terminal sends a circuit switching service request message to a radio network controller.

Step 208: The radio network controller sends the circuit switching service request message to a mobile switching center.

Particularly, if the terminal has no voice service to initiate, but needs to initiate a common service, the terminal may reselect another LTE evolved NodeB.

It should be noted that after the terminal receives the system message sent by the evolved NodeB and needs to initiate a voice call, optionally, the terminal may determine, by using the system message, that the network load of the evolved NodeB is excessively heavy, and the evolved NodeB cannot be used to perform the voice service. For example, the system message may be an indication directly indicating that the network load of the evolved NodeB is excessively heavy, and the evolved NodeB cannot be used to perform the voice service, or the system message may include a value of the network load of the evolved NodeB. The terminal determines a network load status of the evolved NodeB based on a comparison between current network load and a preset threshold. For example, when the terminal determines that the network load of the evolved NodeB is greater than or equal to the preset threshold, it indicates that the network load of the evolved NodeB is relatively heavy, and a mobile device cannot perform the voice service by using the evolved NodeB. Optionally, the terminal determines, by using the ACB parameter, that the evolved NodeB prohibits access of the terminal.

### Embodiment 2

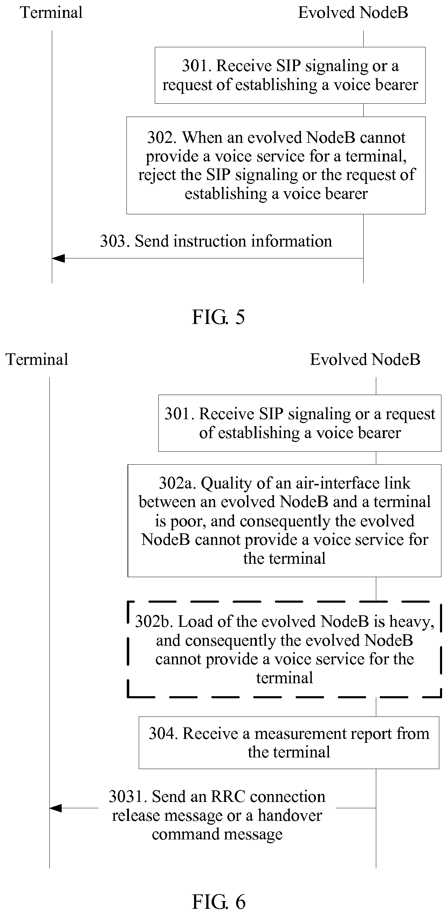

This embodiment of the present invention provides a method for triggering a circuit switching fallback procedure. A terminal accesses a cell deployed on an evolved NodeB, and the terminal is in a connected state. As shown in FIG. 5, the method includes the following steps.

Step 301: The evolved NodeB receives SIP signaling or a request of establishing a voice bearer.

It should be noted that the SIP signaling is obtained by the evolved NodeB through application-layer parsing. The SIP signaling may be uplink Session Initiation Protocol (UL SIP) signaling, namely, SIP signaling sent by the terminal to the evolved NodeB, and the terminal is a calling terminal; or the SIP signaling is downlink Session Initiation Protocol (DL SIP) signaling, that is, SIP signaling sent by the evolved NodeB to the terminal. The DL SIP signaling is used to instruct the terminal to establish a voice call, and the terminal is a called terminal.

The evolved NodeB may receive, by using an MME included in a core network, the request of establishing a voice bearer. A bearer establishment request message is used to instruct the evolved NodeB to establish a voice service bearer for the terminal.

Step 302: When the evolved NodeB cannot provide a voice service for the terminal, the evolved NodeB rejects the SIP signaling or the request of establishing a voice bearer.

Specifically, the evolved NodeB may reject, by initiating a procedure of releasing a bearer of the terminal, the SIP signaling or the request of establishing a voice bearer.

Step 303: The evolved NodeB sends instruction information to the terminal.

The instruction information is used to instruct the terminal to access a base station of a 2G/3G network to perform the voice service. The instruction information includes information about the base station of the 2G/3G network. The terminal is a calling terminal or a called terminal.

In this way, when the terminal is in the connected state, after the evolved NodeB receives the SIP signaling or the request of establishing a voice bearer, and determining that the evolved NodeB cannot provide the voice service for the terminal, the evolved NodeB rejects the SIP signaling or the request of establishing a voice bearer, and sends the instruction information to the terminal, instructing the terminal to access the base station of the 2G/3G network to perform the voice service. In this way, after receiving, from the evolved NodeB, the system message that is used to indicate that the evolved NodeB cannot perform the voice service of the terminal, the terminal performs, based on the indication of the system message, cell reselection and camps on the base station of the 2G/3G network, and initiates the voice service by using the base station of the 2G/3G network. This avoids that when weak coverage occurs in an LTE network, after the terminal initiates a voice call by using the evolved NodeB, the evolved NodeB triggers the circuit switching fallback procedure based on an instruction of an MME, thereby shortening a latency of voice call initiation by the terminal, improving a call success probability of the voice service of the terminal, and improving user call quality and user experience to some extent.

Specifically, as shown in FIG. 6, that the evolved NodeB cannot provide the voice service for the terminal specifically includes the following steps.

Step 302a: Quality an air-interface link between the evolved NodeB and the terminal is poor, and consequently the evolved NodeB cannot provide the voice service for the terminal.

For example, the evolved NodeB may determine a quality status of an air-interface signal based on a comparison between current air-interface signal quality and a preset threshold. For example, when the evolved NodeB determines that the air-interface signal quality is less than or equal to the preset threshold, it indicates that the air-interface signal quality is relatively poor, and the terminal cannot perform the voice service by using the evolved NodeB.

Step 302b: Load of the evolved NodeB is heavy, and consequently the evolved NodeB cannot provide the voice service for the terminal.

For example, the evolved NodeB may determine a network load status of the evolved NodeB based on a comparison between current network load and a preset threshold. For example, when the evolved NodeB determines that the network load of the evolved NodeB is greater than or equal to the preset threshold, it indicates that the network load of the evolved NodeB is relatively heavy, and the terminal cannot perform the voice service by using the evolved NodeB.

It should be noted that when the instruction information is redirection instruction information, that the evolved NodeB sends instruction information to the terminal in step 303 may be implemented in the following step.

Step 3031: The evolved NodeB sends an RRC connection release message or a handover command message to the terminal.

The RRC connection release message or the handover command message includes the redirection instruction information.

Before step 303, the evolved NodeB may further perform the following step.

Step 304: The evolved NodeB receives a measurement report from the terminal.

The measurement report is used to indicate air-interface information of the base station of the 2G/3G network.

### Embodiment 3

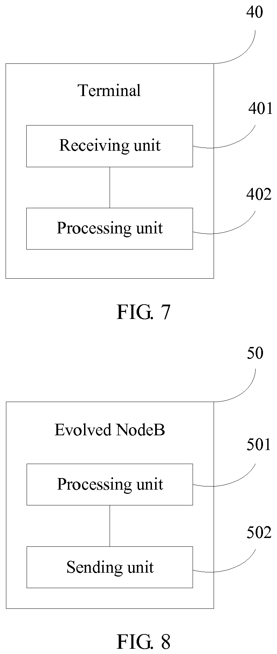

This embodiment of the present invention provides a terminal 40. As shown in FIG. 7, the terminal 40 includes:
a receiving unit 401, configured to receive a system message from an evolved NodeB, where the system message is used to indicate that the evolved NodeB cannot perform a voice service of the terminal; and
a processing unit 402, configured to: after the receiving unit 401 receives the system message, initiate the voice service by using a base station of a 2G/3G network.

In this embodiment, the terminal 40 is presented in a form of a function unit. The "unit" herein may be an ASIC, a processor and a memory that execute one or more software or firmware programs, an integrated logic circuit, and/or another device that can provide the foregoing functions. In a simple embodiment, a person skilled in the art may figure out that the terminal 40 may use a form shown in FIG. 7. The receiving unit 401 and the processing unit 402 may be implemented by using the computer device in FIG. 2. Specifically, the receiving unit 401 may be implemented by the communications interface 104, and the processing unit 402 may be implemented by the processor 101.

### Embodiment 4

This embodiment of the present invention provides an evolved NodeB 50. As shown in FIG. 8, the evolved NodeB 50 includes:
a processing unit 501, configured to generate a system message; and
a sending unit 502, configured to broadcast the system message, where the system message is used to indicate that the evolved NodeB cannot perform a voice service.

In this embodiment, the evolved NodeB 50 is presented in a form of a function unit. The "unit" herein may be an ASIC, a processor and a memory that execute one or more software or firmware programs, an integrated logic circuit, and/or another device that can provide the foregoing functions. In a simple embodiment, a person skilled in the art may figure out that the evolved NodeB 50 may use a form shown in FIG. 8. The processing unit 501 and the sending unit 502 may be implemented by using the computer device in FIG. 2. Specifically, the processing unit 501 may be implemented by the processor 101, and the sending unit 502 may be implemented by the communications interface 104.

### Embodiment 5

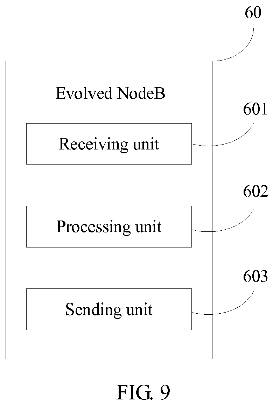

This embodiment of the present invention provides an evolved NodeB 60. As shown in FIG. 9, the evolved NodeB 60 includes:
a receiving unit 601, configured to receive Session Initiation Protocol SIP signaling or a request of establishing a voice bearer;
a processing unit 602, configured to: when the evolved NodeB cannot provide a voice service for a terminal, reject the SIP signaling or the request of establishing a voice bearer; and
a sending unit 603, configured to send instruction information to the terminal; where the instruction information is used to instruct the terminal to access a base station of a 2G/3G network to perform the voice service.

In this embodiment, the evolved NodeB 60 is presented in a form of a function unit. The "unit" herein may be an ASIC, a processor and a memory that execute one or more software or firmware programs, an integrated logic circuit, and/or another device that can provide the foregoing functions. In a simple embodiment, a person skilled in the art may figure out that the evolved NodeB 60 may use a form shown in FIG. 9. The receiving unit 601, the processing unit 602, and the sending unit 603 may be implemented by using the computer device in FIG. 2. Specifically, the receiving unit 601 and the sending unit 603 may be implemented by the communications interface 104, and the processing unit 602 may be implemented by the processor 101.

For same or similar parts in the embodiments of this specification, reference may be mutually made to these embodiments, and details are not described herein again.

A person of ordinary skill in the art may understand that all or some of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a read-only memory (Read-Only Memory, ROM), a random-access memory (Random-Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for triggering a circuit switching fallback procedure, comprising:
receiving, by a terminal in an idle state, a system message from an evolved NodeB, wherein the system message is used to indicate that the evolved NodeB cannot perform a voice service of the terminal; and
after receiving the system message, initiating, by the terminal, the voice service by using a base station of a 2G/3G network.

2. The method according to claim 1, wherein
the system message comprises load information of the evolved NodeB; wherein
with load indicated by the load information, the evolved NodeB cannot perform the voice service of the terminal.

3. The method according to claim 1, wherein
the system message comprises an access class barring ACB parameter; wherein
the ACB parameter is used to indicate that the terminal cannot access the evolved NodeB.

4. The method according to any one of claims 1 to 3, further comprising:
performing, by the terminal, neighboring cell measurement, wherein the neighboring cell measurement is used to select the base station of the 2G/3G network.

5. A method for triggering a circuit switching fallback procedure, comprising:
generating, by an evolved NodeB, a system message; and
broadcasting, by the evolved NodeB, the system message, wherein the system message is used to indicate that the evolved NodeB cannot perform a voice service.

6. The method according to claim 5, wherein
the system message comprises load information of the evolved NodeB; wherein
with load indicated by the load information, the evolved NodeB cannot perform the voice service.

7. The method according to claim 5, wherein
the system message comprises an access class barring ACB parameter; wherein
the ACB parameter is used to indicate that a terminal that does not meet the ACB parameter condition cannot access the evolved NodeB.

8. A method for triggering a circuit switching fallback procedure, comprising:
receiving, by an evolved NodeB, Session Initiation Protocol SIP signaling or a request of establishing a voice bearer; and
when the evolved NodeB cannot provide a voice service for a terminal, rejecting, by the evolved NodeB, the SIP signaling or the request of establishing a voice bearer, and sending instruction information to the terminal; wherein the instruction information is used to instruct the terminal to access a base station of a 2G/3G network to perform the voice service.

9. The method according to claim 8, wherein that the evolved NodeB cannot provide a voice service for a terminal comprises:
quality of an air-interface link between the evolved NodeB and the terminal is poor, and consequently the evolved NodeB cannot provide the voice service for the terminal; or
load of the evolved NodeB is heavy, and consequently the evolved NodeB cannot provide the voice service for the terminal.

10. The method according to claim 8 or 9, wherein the rejecting, by the evolved NodeB, the SIP signaling comprises:
initiating, by the evolved NodeB, a procedure of releasing a bearer of the terminal.

11. The method according to any one of claims 8 to 10, wherein the instruction information comprises:
information about the base station of the 2G/3G network.

12. The method according to any one of claims 8 to 11, wherein:
the instruction information is redirection instruction information; and
the sending, by the evolved NodeB, instruction information to the terminal comprises:
sending, by the evolved NodeB, an RRC connection release message or a handover command message to the terminal, wherein the RRC connection release message or the handover command message comprises the redirection instruction information.

13. The method according to any one of claims 8 to 12, further comprising:
receiving, by the evolved NodeB, a measurement report from the terminal, wherein the measurement report is used to indicate air-interface information of the base station of the 2G/3G network.

14. The method according to any one of claims 8 to 13, wherein the terminal is a calling terminal or a called terminal.

15. The method according to any one of claims 8 to 14, wherein the SIP signaling is obtained by the evolved NodeB through application-layer parsing.

16. A terminal, wherein the terminal is in an idle state, and the terminal comprises:
a receiving unit, configured to receive a system message from an evolved NodeB, wherein the system message is used to indicate that the evolved NodeB cannot perform a voice service of the terminal; and
a processing unit, configured to: after the receiving unit receives the system message, initiate the voice service by using a base station of a 2G/3G network.

17. The terminal according to claim 16, wherein:
the system message comprises load information of the evolved NodeB; wherein
with load indicated by the load information, the evolved NodeB cannot perform the voice service of the terminal.

18. The terminal according to claim 16, wherein:
the system message comprises an access class barring ACB parameter; wherein
the ACB parameter is used to indicate that the terminal cannot access the evolved NodeB.

19. The terminal according to any one of claims 16 to 18, wherein
the processing unit is further configured to perform neighboring cell measurement, wherein the neighboring cell measurement is used to select the base station of the 2G/3G network.

20. An evolved NodeB, comprising:
a processing unit, configured to generate a system message; and
a sending unit, configured to broadcast the system message, wherein the system message is used to indicate that the evolved NodeB cannot perform a voice service.

21. The evolved NodeB according to claim 20, wherein
the system message comprises load information of the evolved NodeB; wherein
with load indicated by the load information, the evolved NodeB cannot perform the voice service.

22. The evolved NodeB according to claim 20, wherein
the system message comprises an access class barring ACB parameter; wherein
the ACB parameter is used to indicate that a terminal that does not meet the ACB parameter condition cannot access the evolved NodeB.

23. An evolved NodeB, comprising:
a receiving unit, configured to receive Session Initiation Protocol SIP signaling or a request of establishing a voice bearer;
a processing unit, configured to: when the evolved NodeB cannot provide a voice service for a terminal, reject the SIP signaling or the request of establishing a voice bearer; and
a sending unit, configured to send instruction information to the terminal; wherein the instruction information is used to instruct the terminal to access a base station of a 2G/3G network to perform the voice service.

24. The evolved NodeB according to claim 23, wherein that the evolved NodeB cannot provide a voice service for a terminal comprises:
quality of an air-interface link between the evolved NodeB and the terminal is poor, and consequently the evolved NodeB cannot provide the voice service for the terminal; or
load of the evolved NodeB is heavy, and consequently the evolved NodeB cannot provide the voice service for the terminal.

25. The evolved NodeB according to claim 23 or 24, wherein the processing unit is specifically configured to:
initiate a procedure of releasing a bearer of the terminal.

26. The evolved NodeB according to any one of claims 23 to 25, wherein the instruction information comprises:
information about the base station of the 2G/3G network.

27. The evolved NodeB according to any one of claims 23 to 26, wherein
the instruction information is redirection instruction information; and
the sending unit is specifically configured to:
send an RRC connection release message or a handover command message to the terminal, wherein the RRC connection release message or the handover command message comprises the redirection instruction information.

28. The evolved NodeB according to any one of claims 23 to 27, wherein
the receiving unit is further configured to receive a measurement report from the terminal, wherein the measurement report is used to indicate air-interface information of the base station of the 2G/3G network.

29. The evolved NodeB according to any one of claims 23 to 28, wherein the terminal is a calling terminal or a called terminal.

30. The evolved NodeB according to any one of claims 23 to 29, wherein the SIP signaling is obtained by the evolved NodeB through application-layer parsing.

31. A terminal, wherein the terminal is in an idle state, and the terminal comprises:
a transceiver, configured to receive a system message from an evolved NodeB, wherein the system message is used to indicate that the evolved NodeB cannot perform a voice service of the terminal; and
a processor, configured to: after the transceiver receives the system message, initiate the voice service by using a base station of a 2G/3G network.

32. The terminal according to claim 31, wherein:
the system message comprises load information of the evolved NodeB; wherein
with load indicated by the load information, the evolved NodeB cannot perform the voice service of the terminal.

33. The terminal according to claim 31, wherein:
the system message comprises an access class barring ACB parameter; wherein
the ACB parameter is used to indicate that the terminal cannot access the evolved NodeB.

34. The terminal according to any one of claims 31 to 33, wherein
the processor is further configured to perform neighboring cell measurement, wherein the neighboring cell measurement is used to select the base station of the 2G/3G network.

35. An evolved NodeB, comprising:
a processor, configured to generate a system message; and
a transceiver, configured to broadcast the system message, wherein the system message is used to indicate that the evolved NodeB cannot perform a voice service.

36. The evolved NodeB according to claim 35, wherein
the system message comprises load information of the evolved NodeB; wherein
with load indicated by the load information, the evolved NodeB cannot perform the voice service.

37. The evolved NodeB according to claim 35, wherein
the system message comprises an access class barring ACB parameter; wherein
the ACB parameter is used to indicate that a terminal that does not meet the ACB parameter condition cannot access the evolved NodeB.

38. An evolved NodeB, comprising:
a transceiver, configured to receive Session Initiation Protocol SIP signaling or a request of establishing a voice bearer; and
a processor, configured to: when the evolved NodeB cannot provide a voice service for a terminal, reject the SIP signaling or the request of establishing a voice bearer; wherein
the transceiver is further configured to send instruction information to the terminal; wherein the instruction information is used to instruct the terminal to access a base station of a 2G/3G network to perform the voice service.

39. The evolved NodeB according to claim 38, wherein that the evolved NodeB cannot provide a voice service for a terminal comprises:
quality of an air-interface link between the evolved NodeB and the terminal is poor, and consequently the evolved NodeB cannot provide the voice service for the terminal; or
load of the evolved NodeB is heavy, and consequently the evolved NodeB cannot provide the voice service for the terminal.

40. The evolved NodeB according to claim 38 or 39, wherein the processor is specifically configured to:
initiate a procedure of releasing a bearer of the terminal.

41. The evolved NodeB according to any one of claims 38 to 40, wherein the instruction information comprises:
information about the base station of the 2G/3G network.

42. The evolved NodeB according to any one of claims 38 to 41, wherein
the instruction information is redirection instruction information; and
the transceiver is specifically configured to:
send an RRC connection release message or a handover command message to the terminal, wherein the RRC connection release message or the handover command message comprises the redirection instruction information.

43. The evolved NodeB according to any one of claims 38 to 42, wherein
the transceiver is further configured to receive a measurement report from the terminal, wherein the measurement report is used to indicate air-interface information of the base station of the 2G/3G network.

44. The evolved NodeB according to any one of claims 38 to 43, wherein the terminal is a calling terminal or a called terminal.

45. The evolved NodeB according to any one of claims 38 to 44, wherein the SIP signaling is obtained by the evolved NodeB through application-layer parsing.

46. A communications system, comprising:
the terminal according to any one of claims 16 to 19 or 31 to 34, the evolved NodeB according to any one of claims 20 to 22 or 35 to 37, and the evolved NodeB according to any one of claims 23 to 30 or 38 to 45.
